# EUROPÄISCHE PATENTSCHRIFT

(11) **EP 3 986 725 B1**
(45) Veröffentlichungstag und Bekanntmachung des Hinweises auf die Patenterteilung: **06.08.2025**
(21) Anmeldenummer: 20733389.9
(22) Anmeldetag: 12.06.2020
(51) Int. Cl.: B60C 9/00, B60C 9/20

(54) **FAHRZEUGREIFEN MIT GÜRTELBANDAGE**
VEHICLE TYRE HAVING A BELT BANDAGE
PNEU DE VÉHICULE ÉQUIPÉ D'UNE NAPPE CEINTURE

(30) Priorität: 19.06.2019 DE 102019208984
(43) Veröffentlichungstag der Anmeldung: 27.04.2022
(73) Patentinhaber: Continental Reifen Deutschland GmbH, 30175 Hannover (DE)
(72) Erfinder: REESE, Wolfgang, 30419 Hannover (DE)
(74) Vertreter: Continental Corporation
(86) Internationale Anmeldenummer: PCT/EP2020/066409
(87) Internationale Veröffentlichungsnummer: WO 2020/254215

(56) Entgegenhaltungen:
- EP-A1- 2 708 380
- WO-A1-2014/001039
- WO-A1-2017/048208
- DE-A1- 102010 017 107

## Beschreibung

Die Erfindung betrifft einen Fahrzeugreifen aufweisend eine Gürtelbandage, wobei die Gürtelbandage Festigkeitsträger umfasst, wobei die Festigkeitsträger Hybridkorde umfassen, welche innerhalb der Lage parallel zueinander angeordnet sind und wobei die Hybridkorde jeweils wenigstens ein Garn aus Polyethylenterephthalat (PET) und wenigstens ein Garn aus Polyamid enthalten.

Festigkeitsträger zur Verstärkung verschiedener elastomerer Erzeugnisse sind hinreichend bekannt. So ist für Fahrzeugluftreifen bekannt, eine Gürtelbandage zu verwenden, die ein- oder mehrlagig ausgebildet ist, die Gürtelränder abdeckt und parallel und im wesentlichen in Umfangsrichtung verlaufende Festigkeitsträger in Form von im Gummi eingebetteten Korden enthält. Diese Gürtelbandage dient dazu, insbesondere im Hochgeschwindigkeitseinsatz, eine Erhebung des Reifen durch die im Fahrbetrieb auftretenden Fliehkräfte zu verhindern.

Die Bandage wird bei der Reifenherstellung in Form von Lagen, Streifen oder Einzel-Korden mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in der der fachkundigen Person bekannten Art mit einer Imprägnierung vorbehandelt sind, in Längsrichtung einen Kalander oder einen Extruder zur Ummantelung mit der Kautschukmischung durchlaufen. Bei der Bombage mit bisher im Einsatz befindlichen Vorrichtungen und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird. Bei neueren Aufbautrommeln wird nur noch eine geringere Dehnung während der Reifenherstellung von etwa max. 2 % gefordert. Bei moderneren Vorrichtungen ist die Erhebung geringer. Ein weiteres Problem besteht in dem Schrumpfverhalten des jeweiligen Kordmaterials bei erhöhter Temperatur. Ein geringeres Schrumpfverhalten bedingt eine höhere Dimensionsstabilität des Fahrzeugreifens und somit ein besseres, der fachkundigen Person bekanntes, Flatspot-Verhalten (= reversible plastische Abplattungen in der Bodenaufstandsfläche beim Parken).

Die Korde der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten. Um diesen Anforderungen zu genügen, sollten sich die Korde bis zu einer Dehnung von bis zu ca. 3 % mit mäßigem Kraftaufwand und ab einer höheren Dehnung nur noch mit sehr hohem Kraftaufwand dehnen lassen.

Aus der US 7,252,129 B2 ist ein Hybridkord bestehend aus Aramidfasern und einer weiteren Faser ausgewählt aus der Gruppe bestehend aus Polyester, Nylon und Rayon bekannt. Dieser Hybridkord gewährleistet eine geringere Separierung der einzelnen Fäden der Festigkeitsträgerlage.

In der KR 100829260 B1 und der KR 100829261 werden Hybridkorde aus PET (Polyethylenterephthalat) und Nylon beschrieben, die mit 270 bis 330 t/m (330 turns per meter) miteinander endverdreht sind und mit einem zweifachen Dip behandelt sind. Hiermit werden im Vergleich zu einem einfach gedippten Kord aus Nylon eine Verringerung der Dehnung bei 45 N und eine niedrigere Schrumpfung bei 180 °C erzielt. Der Einfluss auf die Schrumpfkraft geht aus diesen Schriften nicht hervor.

Auch in der WO 2014/001039 A1, WO 2015/137901 A1 und der WO 2017/048208 A1 werden Hybridkorde aus Polyester und Polyamid beschrieben.

In der WO 2011/147635 A1 wird die Verwendung von recyceltem PET, insbesondere in der Karkasslage von Fahrzeugreifen, offenbart. Eine sehr ähnliche Verwendung offenbart zudem EP 2 708 380 A1.

Der vorliegenden Erfindung liegt die Aufgabe zugrunde, einen Fahrzeugreifen der eingangs genannten Art aufweisend eine Gürtelbandage bereitzustellen, der eine weitere Verbesserung im Schrumpfverhalten und damit insbesondere ein verbessertes Hochgeschwindigkeitsverhalten aufweist. Gleichzeitig soll der Reifen möglichst nachhaltig produziert sein und eine Verbesserung der Rollwiderstandseigenschaften aufweisen.

Gelöst wird diese Aufgabe dadurch, dass das PET recyceltes PET (rPET) ist.

Überraschenderweise wurde gefunden, dass mit recyceltem PET als Festigkeitsträger eine weitere Verbesserung im Schrumpfverhalten (ein größerer Schrumpf) erzielt wird, als mit PET, welches originär aus Erdöl hergestellt wird, also nicht recyceltem PET, und in der Gürtelbandage des erfindungsgemäßen Fahrzeugreifens verbesserte Eigenschaften erzielt werden: Der erfindungsgemäße Fahrzeugreifen weist eine verbesserte Hochgeschwindigkeitstauglichkeit auf. Mögliche Kordkompressionen an der Gürtelkante treten nicht mehr oder stark reduziert auf, sodass weniger Kordbrüche entstehen. Zudem hat die Verwendung von recyceltem PET ökologische und ökonomische Vorteile. Hierdurch wird vermieden, dass neue (nicht recycelte) Erdöl-basierte Materialien hergestellt werden, sodass die endliche Ressource Erdöl nicht belastet wird.

Unter "recyceltem PET" wird im Rahmen der vorliegenden Erfindung PET verstanden, welches aus PET-Altprodukten wie PET-Flaschen oder andere PET-Artikel insbesondere durch Umschmelzen gewonnen wurde. Ein signifikanter Abbau und Neuaufbau der Polymere finden hierbei nicht statt. Das unmittelbare Ausgangsmaterial für recyceltes PET ist nicht Erdöl, sondern Flaschen oder andere Artikel aus PET.

Im Rahmen der vorliegenden Erfindung stellen Korde linienförmige Gebilde dar, die aus zwei oder mehr miteinander verdrehten Garnen bestehen. Ein Hybridkord stellt einen Kord dar, bei dem zwei oder mehr unterschiedliche Garne miteinander verdreht sind. Ein Garn ist im Rahmen der vorliegenden Erfindung in Anlehnung an die DIN 60900 ein linienförmiges Gebilde, das aus einzelnen Filamenten oder Fasern besteht.

Die Einheit "dtex" ist dem Fachmann bekannt und ist ein Maß für das Gewicht pro Länge. Je geringer die Feinheit in dtex, desto leichter ist das entsprechende Garn oder der Kord.

Gemäß der Erfindung weist das Garn aus recyceltem PET eine Feinheit von 200 bis 1670 dtex, bevorzugt 200 bis1350 dtex, auf.

Mit derartigen Feinheiten des Garns aus recyceltem PET im Hybridkord in der Gürtelbandage des erfindungsgemäßen Reifens werden besonders gute Hochgeschwindigkeitstauglichkeiten bei gleichzeitiger Reduktion an Gewicht und damit einer Verbesserung des Rollwiderstandes erzielt.

Gemäß der Erfindung weist das Garn aus Polyamid eine Feinheit von 200 bis 1400 dtex, bevorzugt 200 bis 1000 dtex, auf.

Mit derartigen Feinheiten des Garns Polyamid im Hybridkord in der Gürtelbandage des erfindungsgemäßen Reifens werden u. a. auch im Vergleich zu Korden aus 100 Gew.-% Nylon besonders gute Hochgeschwindigkeitstauglichkeiten bei gleichzeitiger Reduktion an Gewicht und damit einer Verbesserung des Rollwiderstandes erzielt.

Gemäß der Erfindung weist der Hybridkord der Gürtelbandage insgesamt eine Feinheit (Gesamtfeinheit) von 400 bis 2900 dtex, bevorzugt 400 bis 2200 dtex, auf.

Mit derartigen Gesamtfeinheiten des Hybridkords in der Gürtelbandage des erfindungsgemäßen Reifens werden besonders gute Hochgeschwindigkeitstauglichkeiten bei gleichzeitiger Reduktion an Gewicht und damit einer Verbesserung des Rollwiderstandes erzielt.

Gemäß vorteilhafter Ausführungsformen der Erfindung sind das Garn aus recyceltem PET und das Garn aus Polyamid mit 200 bis 700 t/m, bevorzugt 300 bis 600 t/m, zu dem Hybridkord miteinander endverdreht. Hierdurch geben sich sehr gute Ermüdungsbeständigkeiten, sodass der Reifen eine sehr gute Haltbarkeit aufweist.

Die Kordfadendichte der Gürtelbandage beträgt 50 bis 150 epdm, bevorzugt 50 bis 120 epdm. Diese Dichte gewährleistet eine ausreichende Festigkeit bei der Anwendung im Fahrzeugluftreifen.

Durch die erfindungsgemäße Verwendung von rPET und Polyamid in der Gürtelbandage kann die Anzahl der Korde bezogen auf die Reifenbreite (epdm = ends per decimeter) und/oder die Lagenstärke reduziert werden, was wiederum Rollwiderstandsvorteile mit sich bringt. Gleichzeitig wird hierdurch eine höhere Dimensionsstabilität und damit ein verbessertes Flatspot-Verhalten erzielt.

Gemäß einer besonders vorteilhaften Ausführungsform der Erfindung weist das Garn aus recyceltem PET eine Feinheit von 1000 bis 1200 dtex und das Garn aus Polyamid eine Feinheit von 900 bis 1000 dtex auf. Hiermit werden besonders gute Eigenschaften zur Lösung der der Erfindung zugrunde liegenden Aufgabe erzielt, wie auch in Tabelle 1 erkennbar, s. unten.

Bevorzugt sind hierbei das Garn aus recyceltem PET und das Garn aus Polyamid mit 300 bis 380 t/m zu dem Hybridkord miteinander endverdreht. Hierdurch wird eine sehr gute Ermüdungsbeständigkeit erzielt.

Gemäß der Erfindung beträgt die Kordfadendichte in der Gürtelbandage hierbei 50 bis 150 epdm, bevorzugt 70 bis 120 epdm.

Durch die an die Feinheiten angepasste Kordfadendichte ergeben sich optimale Eigenschaften im Hinblick auf die technische Aufgabe und insbesondere die Hochgeschwindigkeitstauglichkeit, die Dimensionsstabilität - und damit das Flatspot-Verhalten - und das Rollwiderstandsverhalten.

Gemäß einer weiteren besonders vorteilhaften Ausführungsform der Erfindung weist das Garn aus recyceltem PET eine Feinheit von 200 bis 360 dtex und das Garn aus Polyamid eine Feinheit von 200 bis 360 dtex auf. Hiermit werden besonders gute Eigenschaften zur Lösung der der Erfindung zugrunde liegenden Aufgabe erzielt, wie auch in Tabelle 2 erkennbar, s. unten. Mit diesen Feinheiten werden gleichzeitig insbesondere sehr dünne Lagen in Gürtelbandagen von erfindungsgemäßen Fahrzeugreifen erzielt. Hiermit wird das Rollwiderstandsverhalten weiter optimiert.

Bevorzugt sind hierbei das Garn aus recyceltem PET und das Garn aus Polyamid mit 500 bis 600 t/m zu dem Hybridkord miteinander endverdreht. Hierdurch wird eine sehr gute Ermüdungsbeständigkeit erzielt.

Bevorzugt beträgt die Kordfadendichte in der Gürtelbandage hierbei 100 bis 150 epdm, besonders bevorzugt 110 bis 130 epdm.

Durch die an die Feinheiten angepasste Kordfadendichte ergeben sich optimale Eigenschaften im Hinblick auf die technische Aufgabe und insbesondere die Hochgeschwindigkeitstauglichkeit, die Dimensionsstabilität - und damit das Flatspot-Verhalten - und das Rollwiderstandsverhalten.

Gemäß einer weiteren besonders vorteilhaften Ausführungsform der Erfindung weist das Garn aus recyceltem PET eine Feinheit von 700 bis 800 dtex und das Garn aus Polyamid eine Feinheit von 680 bis 780 dtex auf. Hiermit werden besonders gute Eigenschaften zur Lösung der der Erfindung zugrunde liegenden Aufgabe erzielt. Auch mit diesen Feinheiten können u. a. im Vergleich zu Korden aus 100 Gew.-% Nylon dünnere Lagen in Gürtelbandagen von erfindungsgemäßen Fahrzeugreifen erzielt werden. Hiermit wird das Rollwiderstandsverhalten weiter optimiert.

Bevorzugt sind hierbei das Garn aus recyceltem PET und das Garn aus Polyamid mit 350 bis 450 t/m zu dem Hybridkord miteinander endverdreht. Hierdurch wird eine sehr gute Ermüdungsbeständigkeit erzielt.

Bevorzugt beträgt die Kordfadendichte in der Gürtelbandage hierbei 50 bis 80 epdm. Durch die an die Feinheiten angepasste Kordfadendichte ergeben sich optimale Eigenschaften im Hinblick auf die technische Aufgabe und insbesondere die Hochgeschwindigkeitstauglichkeit, die Dimensionsstabilität - und damit das Flatspot-Verhalten - und das Rollwiderstandsverhalten.

Gemäß einer weiteren besonders vorteilhaften Ausführungsform der Erfindung weist das Garn aus recyceltem PET eine Feinheit von 500 bis 600 dtex und das Garn aus Polyamid eine Feinheit von 430 bis 530 dtex auf. Hiermit werden besonders gute Eigenschaften zur Lösung der der Erfindung zugrunde liegenden Aufgabe erzielt. Auch mit diesen Feinheiten können u. a. im Vergleich zu Korden aus 100 Gew.-% Nylon dünnere Lagen in Gürtelbandagen von erfindungsgemäßen Fahrzeugreifen erzielt werden. Hiermit wird das Rollwiderstandsverhalten weiter optimiert sowie eine erhöhte Dimensionsstabilität erzielt.

Bevorzugt sind hierbei das Garn aus recyceltem PET und das Garn aus Polyamid mit 400 bis 500 t/m zu dem Hybridkord miteinander endverdreht. Hierdurch wird eine sehr gute Ermüdungsbeständigkeit erzielt.

Bevorzugt beträgt die Kordfadendichte in der Gürtelbandage hierbei 70 bis 100 epdm. Durch die an die Feinheiten angepasste Kordfadendichte ergeben sich optimale Eigenschaften im Hinblick auf die technische Aufgabe und insbesondere die Hochgeschwindigkeitstauglichkeit, die Dimensionsstabilität - und damit das Flatspot-Verhalten - und das Rollwiderstandsverhalten.

Das Polyamid des Garns aus Polyamid ist ausgewählt aus der Gruppe bestehend aus Polyamid 6 (PA 6), Polyamid 66 (PA 66), Polyamid 12 (PA 12), Polyamid 11 (PA 11), Polyamid 1313 (PA 1313), Polyamid 4 (PA 4), Polyamid 7 (PA 7), Polyamid 8 (PA 8), Polyamid 9 (PA 9), Polyamid 46 (PA 46), Polyamid 610 (PA 610), Polyamid 612 (PA 612), Polyamid 69 (PA 69) und Polyamid 66/6 (PA 66/6).

Bevorzugt ist die Verwendung von PA 6 und/oder PA 66, besonders bevorzugt ist die Verwendung von PA 66 (Nylon).

Mit PA 66 als Material des Polyamidgarns ergeben sich besonders gute Eigenschaften im Hinblick auf die zugrunde liegende Aufgabe.

Gemäß vorteilhafter Ausführungsformen der Erfindung beträgt der Gewichtsanteil des recycelten PET am Hybridkord 40 bis 60 %. Hierdurch wird die der Erfindung zugrunde liegende Aufgabe optimal gelöst und der Hybridkord weist mit dem recycelten PET einen signifikanten Anteil an nachhaltigem Material auf.

Um eine zuverlässige Haftung von textilen Festigkeitsträgern zum Gummi zu gewährleisten, ist es zweckmäßig, dass die Hybridkorde mit einer Haftimprägnierung zur Gewährleistung der Haftung der Festigkeitsträger zum Gummi versehen sind. Beispielsweise kann diese Haftimprägnierung mit einem RFL-Dip (Resorcin-Formaldehyd-Latex) im 1- oder 2-Bad-Verfahren erfolgen. Es sind aber auch alle weiteren dem Fachmann bekannten Verfahren und Haftmittel zur Imprägnierung denkbar, wie insbesondere Dips, die frei von Resorcin und Formaldehyden sind.

Ferner können dem Fachmann bekannte weitere und übliche Vorbehandlungsverfahren durchgeführt werden, wie insbesondere eine Heißverstreckung der Korde.

Die Gürtelbandage ist bevorzugt in einem Winkel zwischen 0° und 5° zur Umfangsrichtung einlagig oder mehrlagig ausgebildet, wobei einlagig besonders bevorzugt ist. Ausgebildet bedeutet in diesem Zusammenhang, dass sie in Umfangsrichtung einlagig oder mehrlagig, bevorzugt einlagig, gespult ist.

Das Garn aus recyceltem PET kann in S- oder in Z- Richtung verdreht sein.

Das Polyamidgarn kann in S- oder in Z-Richtung verdreht sein.

Vorteilhafterweise weisen die Garne die gleiche Drehrichtung auf. Sie sind also bevorzugt beide entweder in S- oder in Z-Richtung verdreht.

Vorteilhafterweise ist die Drehrichtung zum Hybridkord der Drehrichtung der Garne entgegengesetzt. Hierdurch ergibt sich produktionsbedingt eine verbesserte und konstantere Qualität in Bezug auf die Festigkeit der Korde und damit der Gürtelbandage.

Ausführungsbeispiele und weitere Vorteile der Erfindung werden im Zusammenhang mit den nachfolgenden Tabellen 1 und 2 näher erläutert.

Die erfindungsgemäßen Beispiele sind mit "E" gekennzeichnet und sind beispielhafte und besonders vorteilhafte Konstruktionen von Hybridkorden der Gürtelbandage des erfindungsgemäßen Fahrzeugreifens.

Als Referenzen dienen ein Kord aus Nylon, der üblicherweise in der Gürtelbandage von Fahrzeugreifen eingesetzt wird, und ein Hybridkord aus originärem PET und PA 6.6.

Die Messungen wurden dabei nach den folgenden Methoden durchgeführt:
- Bruchkraft und Bruchdehnung, Kraft und Zugfestigkeit bei 4 % und 6% Dehnung, Dehnung bei 45 N, Schrumpfung bei 180 °C und Schrumpfkraft in Anlehnung an ASTM D 855

Die angegebenen Eigenschaften in der Einheit N/dm beziehen sich jeweils auf die gemessenen Eigenschaften am Kord, welche jeweils mit den ebenfalls in den Tabellen angegebenen möglichen Anzahlen an Korden in der Gürtelbandage pro Reifenbreite (epdm = ends per decimeter) hochgerechnet wurden.

**Tabelle 1**

| Eigenschaft | Einheit | Ref. 1 ^{a)} | Ref. 2 ^{b)} | E1 ^{c)} |
|---|---|---|---|---|
| | | PA 66 1400x2 290 t/m Endverdrehung | Hybridkord PET 1100x1 / PA 66 940x1 340 t/m Endverdrehung | Hybridkord rPET 1100x1 / PA 66 940x1 340 t/m Endverdrehung |
| Bruchkraft | N | 226 | 139 | 141 |
| Dehnung bei 45 N | % | 5,9 | 3,6 | 3,9 |
| Kraft (4 % Dehnung) | N | 30 | 50 | 48 |
| Kraft (4 % Dehnung) | N/dm | 3300 | 4000 | 3840 |
| Zugfestigkeit (4 % Dehnung) | mN/dtex | 10,7 | 24,5 | 23,5 |
| Kraft (6 % Dehnung) | N | 46 | 78 | 76 |
| Kraft (6 % Dehnung) | N/dm | 5060 | 6240 | 6080 |
| Zugfestigkeit (6 % Dehnung) | mN/dtex | 16,4 | 38,2 | 37,3 |
| Bruchdehnung | % | 19 | 11 | 12 |
| Schrumpfung bei 180°C | % | 5,0 | 5,2 | 6,3 |
| Durchmesser | mm | 0,64 | 0,57 | 0,57 |

| | | | | |
|---|---|---|---|---|
| ^{a)} PA 66: Nylon, einzelnes Garn Drehrichtung Z; Kord PA 66 1400x2 Drehrichtung S ^{b)} nicht recyceltes PET- und PA 66-Garn jeweils Drehrichtung Z, Hybridkord PET 1100x1/PA 66 940x1 Drehrichtung S ^{c)} rPET: recyceltes PET; rPET- und PA 66-Garn jeweils Drehrichtung Z, Hybridkord rPET 1100x1/PA 66 940x1 Drehrichtung S | | | | |

Tabelle 1 ist zu entnehmen, dass der erfindungsgemäß in der Gürtelbandage enthaltene Hybridkord aus recyceltem PET und Polyamid (E1) überraschenderweise einen größeren Schrumpf aufweist, als ein Kord aus PA 66 und nicht recyceltem PET (Ref.2). Das überraschenderweise deutlich verbesserte Schrumpfverhalten des Hybridkordes in der Gürtelbandage ergibt im Fahrzeugreifen eine verbesserte Hochgeschwindigkeitstauglichkeit. Mögliche Kordkompressionen an der Gürtelkante treten nicht mehr oder stark reduziert auf, sodass weniger Kordbrüche entstehen.

Im Vergleich zu einem Standardkord aus Nylon für die Gürtelbandage aus dem Stand der Technik (Ref.1) ergeben sich größere Kräfte und Zugfestigkeiten bei 4 und 6 % Dehnung. Somit können die Festigkeitsträger in der Gürtelbandage mit einem geringeren Durchmesser und in einer geringeren Anzahl (in Bezug auf die Reifenbreite) eingesetzt werden. Wie in Tabelle 1 angegeben kann ausgehend von 110 epdm an Standardkorden aus Nylon mit einem Hybridkord aus PET und Nylon die Anzahl reduziert werden und beispielsweise mit 80 epdm trotz geringerer epdm die vorstehend genannten verbesserten Eigenschaften erzielt werden.

Durch die geringere Anzahl an Korden können die einzelnen Korde mit einem größeren Abstand zueinander in der Gürtelbandage angeordnet werden. Hierdurch ergeben sich weniger Scherspannungen in der umgebenden Gummimatrix, was wiederum in einer verbesserten Haltbarkeit resultiert.

Gleichzeitig führt dies zu einem besseren Flatspot-Verhalten und damit einer verbesserten Dimensionsstabilität, da insgesamt weniger an schrumpfendem Material im Reifen angeordnet ist.

Durch den geringeren Durchmesser der Korde im Vergleich zu Ref.1 kann die Gürtelbandage insgesamt dünner ausgeführt werden und es wird auch weniger Gummierungsmischung benötigt. Hierdurch verbessert sich das Rollwiderstandsverhalten des erfindungsgemäßen Reifens.

Dabei ist auch die Feinheit und damit das Gewicht pro Länge des Hybridkordes verringert. Während Ref.1 eine Gesamtfeinheit von 2800 dtex aufweist, ist liegt diese mit der beispielhaften Konstruktion aus PET und Nylon bei 2040 dtex. Durch die Gewichtseinsparung verbessert sich das Rollwiderstandsverhalten des erfindungsgemäßen Reifens.

Die Vorteile, die sich aus dem geringeren Gewicht, der geringeren Anzahl und dem geringeren Durchmesser ergeben, gelten zwar für nicht recyceltes PET und für das recycelte PET. Allerdings wird lediglich mit dem recycelten PET (Erfindung) der genannte erhöhte Schrumpf mit den damit verbundenen Vorteilen erzielt.

E2 ist ein weiteres erfindungsgemäßes Beispiel mit einer nochmals deutlich geringeren Feinheit und damit weiter verbundenen Vorteilen hinsichtlich des Rollwiderstandes. Wie in Tabelle 2 erkennbar, werden auch hiermit gegenüber den jeweiligen Referenzen die Vorteile wie für E1 beschrieben erzielt.

Damit werden auch mit dieser Konstruktion die für die Gürtelbandage wichtigen Eigenschaften Schrumpfung und Zugfestigkeit verbessert.

Gleichzeitig ist die Verwendung von recyceltem PET umweltfreundlich und ressourcenschonend. Zudem weist recyceltes PET ebenfalls wie unmittelbar aus fossilen Rohstoffen gewonnenes PET eine gleichbleibende Qualität auf. Somit kann eine gleichbleibende Produktqualität sichergestellt werden.

Gemäß weiterer beispielhafter Ausführungsformen weist der erfindungsgemäß in der Gürtelbandage enthaltene Hybridkord aus recyceltem PET und Polyamid folgende Konstruktionen auf:
E3: Hybridkord rPET 720x1 / PA 66 700x1, 400 t/m Endverdrehung, 60 epdm
E4: Hybridkord rPET 550x1 / PA 66 470x1, 470 t/m Endverdrehung, 80 epdm

Sowohl bei E3 als auch bei E4 ist ein jedes einzelne Garn in Z-Richtung verdreht und die beiden Hybridkorde sind jeweils in S-Richtung verdreht.

**Tabelle 2**

| Eigenschaft | Einheit | Ref. 3 ^{d)} | Ref. 4 ^{e)} | E2^{f)} |
|---|---|---|---|---|
| | | PA 66 470x2 420 t/m Endverdrehung | Hybridkord PET 225x1 / PA 66 235x1 550 t/m Endverdrehung | Hybridkord rPET 225x1 / PA 66 235x1 550 t/m Endverdrehung |
| Bruchkraft | N | 73 | 30 | 31 |
| Dehnung bei 45 N | % | 5,9 | 3,6 | |
| Kraft (4 % Dehnung) | N | 12 | 14 | 13 |
| Kraft (4 % Dehnung) | N/dm | 1560 | 1680 | 1560 |
| Zugfestigkeit (4 % Dehnung) | mN/dtex | 12,8 | 30,4 | 28,3 |
| Kraft (6 % Dehnung) | N | 18 | 20 | 19 |
| Kraft (6 % Dehnung) | N/dm | 2340 | 2400 | 2280 |
| Zugfestigkeit (6 % Dehnung) | mN/dtex | 19,1 | 43,5 | 41,3 |
| Bruchdehnung | % | 18 | 14 | 15 |
| Schrumpfung bei 180°C | % | 5,0 | 5,3 | 6,4 |
| Durchmesser | mm | 0,40 | 0,25 | 0,25 |
| epdm | | 130 | 120 | 120 |

| | | | | |
|---|---|---|---|---|
| ^{d)} PA 66: Nylon, einzelnes Garn Drehrichtung Z; Kord PA 66 470x2 Drehrichtung S ^{e)} PET- und PA 66-Garn Drehrichtung Z, Hybridkord PET 225x1/PA 66 235x1 Drehrichtung S ^{f)} rPET- und PA 66-Garn jeweils Drehrichtung Z, Hybridkord rPET 225x1/PA 66 235x1 Drehrichtung S | | | | |

## Patentansprüche

1. Fahrzeugreifen aufweisend eine Gürtelbandage, wobei die Gürtelbandage Festigkeitsträger umfasst, wobei die Festigkeitsträger Hybridkorde umfassen, welche innerhalb der Lage parallel zueinander angeordnet sind und wobei die Hybridkorde jeweils wenigstens ein Garn aus Polyethylenterephthalat (PET) und wenigstens ein Garn aus Polyamid enthalten, wobei das PET recyceltes PET (rPET) ist, und
das Garn aus recyceltem PET eine Feinheit von 200 bis 1670 dtex,
das Garn aus Polyamid eine Feinheit von 200 bis 1400 dtex, der Hybridkord insgesamt eine Feinheit von 400 bis 2900 dtex aufweist, **dadurch gekennzeichnet, dass** die Kordfadendichte der Gürtelbandage 50 bis 150 epdm beträgt.

2. Fahrzeugreifen nach Anspruch 1, **dadurch gekennzeichnet, dass** das Garn aus recyceltem PET eine Feinheit von 200 bis1350 dtex aufweist.

3. Fahrzeugreifen nach einem der Ansprüche 1 oder 2, **dadurch gekennzeichnet, dass** das Garn aus Polyamid eine Feinheit von 200 bis 1000 dtex aufweist.

4. Fahrzeugreifen nach einem der der vorherigen Ansprüche, **dadurch gekennzeichnet, dass** der Hybridkord insgesamt eine Feinheit von 400 bis 2200 dtex aufweist.

5. Fahrzeugreifen nach einem der vorherigen Ansprüche, **dadurch gekennzeichnet, dass** das Garn aus recyceltem PET und das Garn aus Polyamid mit 200 bis 700 t/m, bevorzugt 300 bis 600 t/m, zu dem Hybridkord miteinander endverdreht sind.

6. Fahrzeugreifen nach einem der vorherigen Ansprüche, **dadurch gekennzeichnet, dass** das Garn aus recyceltem PET eine Feinheit von 1000 bis 1200 dtex aufweist und das Garn aus Polyamid eine Feinheit von 900 bis 1000 dtex aufweist.

7. Fahrzeugreifen nach Anspruch 6, **dadurch gekennzeichnet, dass** das Garn aus recyceltem PET und das Garn aus Polyamid mit 300 bis 380 t/m zu dem Hybridkord miteinander endverdreht sind.

8. Fahrzeugreifen nach einem der Ansprüche 1 bis 5, **dadurch gekennzeichnet, dass** das Garn aus recyceltem PET eine Feinheit von 200 bis 360 dtex und das Garn aus Polyamid eine Feinheit von 200 bis 360 dtex aufweist.

9. Fahrzeugreifen nach einem der vorherigen Ansprüche, **dadurch gekennzeichnet, dass** es sich bei dem Polyamid um Polyamid 66 (PA 66) handelt.

10. Fahrzeugreifen nach einem der vorherigen Ansprüche, **dadurch gekennzeichnet, dass** der Gewichtsanteil des recycelten PET am Hybridkord 40 bis 60 % beträgt.

11. Fahrzeugreifen nach einem der vorherigen Ansprüche, **dadurch gekennzeichnet, dass** die Kordfadendichte der Gürtelbandage 50 bis 120 epdm beträgt.

## Claims

1. Vehicle tyre comprising a belt bandage, wherein the belt bandage comprises strength members, wherein the strength members comprise hybrid cords arranged parallel to one another within the ply and wherein the hybrid cords each contain at least one yarn made of polyethylene terephthalate (PET) and at least one yarn made of polyamide, wherein
the PET is recycled PET (rPET) and
the yarn made of recycled PET has a fineness of 200 to 1670 dtex,
the yarn made of polyamide has a fineness of 200 to 1400 dtex, the hybrid cord altogether has a fineness of 400 to 2900 dtex, **characterized in that** the cord thread density of the belt bandage is 50 to 150 epdm.

2. Vehicle tyre according to Claim 1, **characterized in that** the yarn made of recycled PET has a fineness of 200 to 1350 dtex.

3. Vehicle tyre according to either of Claims 1 or 2, **characterized in that** the yarn made of polyamide has a fineness of 200 to 1000 dtex.

4. Vehicle tyre according to any of the preceding claims, **characterized in that** the hybrid cord altogether has a fineness of 400 to 2200 dtex.

5. Vehicle tyre according to any of the preceding claims, **characterized in that** the yarn made of recycled PET and the yarn made of polyamide are end-twisted together to form the hybrid cord at 200 to 700 t/m, preferably 300 to 600 t/m.

6. Vehicle tyre according to any of the preceding claims, **characterized in that** the yarn made of recycled PET has a fineness of 1000 to 1200 dtex and the yarn made of polyamide has a fineness of 900 to 1000 dtex.

7. Vehicle tyre according to Claim 6, **characterized in that** the yarn made of recycled PET and the yarn made of polyamide are end-twisted together to form the hybrid cord at 300 to 380 t/m.

8. Vehicle tyre according to any of Claims 1 to 5, **characterized in that** the yarn made of recycled PET has a fineness of 200 to 360 dtex and the yarn made of polyamide has a fineness of 200 to 360 dtex.

9. Vehicle tyre according to any of the preceding claims, **characterized in that** the polyamide is polyamide 66 (PA 66).

10. Vehicle tyre according to any of the preceding claims, **characterized in that** the weight fraction of the recycled PET in the hybrid cord is 40% to 60%.

11. Vehicle tyre according to any of the preceding claims, **characterized in that** the cord thread density of the belt bandage is 50 to 120 epdm.

## Revendications

1. Pneu de véhicule présentant un bandage de ceinture, le bandage de ceinture comprenant des supports de résistance, les supports de résistance comprenant des câblés hybrides qui sont agencés parallèlement les uns aux autres à l'intérieur de la couche et les câblés hybrides contenant chacun au moins un fil de polyéthylène téréphtalate (PET) et au moins un fil de polyamide, où le PET est du PET recyclé (rPET), et
le fil de PET recyclé présente une finesse de 200 à 1 670 dtex,
le fil de polyamide présente une finesse de 200 à 1 400 dtex, le câblé hybride présente au total une finesse de 400 à 2 900 dtex, **caractérisé en ce que** la densité de fils de câblé du bandage de ceinture est de 50 à 150 epdm.

2. Pneu de véhicule selon la revendication 1, **caractérisé en ce que** le fil de PET recyclé présente une finesse de 200 à 1 350 dtex.

3. Pneu de véhicule selon l'une quelconque des revendications 1 ou 2, **caractérisé en ce que** le fil de polyamide présente une finesse de 200 à 1 000 dtex.

4. Pneu de véhicule selon l'une quelconque des revendications précédentes, **caractérisé en ce que** le câblé hybride présente au total une finesse de 400 à 2 200 dtex.

5. Pneu de véhicule selon l'une quelconque des revendications précédentes, **caractérisé en ce que** le fil de PET recyclé et le fil de polyamide sont retordus ensemble à 200 à 700 t/m, de préférence 300 à 600 t/m, pour former le câblé hybride.

6. Pneu de véhicule selon l'une quelconque des revendications précédentes, **caractérisé en ce que** le fil de PET recyclé présente une finesse de 1 000 à 1 200 dtex et le fil de polyamide présente une finesse de 900 à 1 000 dtex.

7. Pneu de véhicule selon la revendication 6, **caractérisé en ce que** le fil de PET recyclé et le fil de polyamide sont retordus ensemble à 300 à 380 t/m pour former le câblé hybride.

8. Pneu de véhicule selon l'une quelconque des revendications 1 à 5, **caractérisé en ce que** le fil de PET recyclé présente une finesse de 200 à 360 dtex et le fil de polyamide présente une finesse de 200 à 360 dtex.

9. Pneu de véhicule selon l'une quelconque des revendications précédentes, **caractérisé en ce que** le polyamide est le polyamide 66 (PA 66).

10. Pneu de véhicule selon l'une quelconque des revendications précédentes, **caractérisé en ce que** le pourcentage en poids de PET recyclé dans le câble hybridé est de 40 à 60 %.

11. Pneu de véhicule selon l'une quelconque des revendications précédentes, **caractérisé en ce que** la densité de fils de câblé du bandage de ceinture est de 50 à 120 epdm.
